(19) **Europäisches Patentamt / European Patent Office / Office européen des brevets**

(11) **EP 3 276 379 A1**

(12) # EUROPEAN PATENT APPLICATION

(43) Date of publication:
**31.01.2018 Bulletin 2018/05**

(21) Application number: **16382363.6**

(22) Date of filing: **27.07.2016**

(51) Int Cl.:
*G01S 19/34* (2010.01)        *G01S 19/14* (2010.01)
*H04W 4/04* (0000.00)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Telefonica Digital España, S.L.U.**
**28013 Madrid (ES)**

(72) Inventors:
• **FONSECA MONTERO, Eduardo, David**
**28013 MADRID (ES)**

• **FERNÁNDEZ POZO, Rubén**
**28013 MADRID (ES)**
• **HERNÁNDEZ GÓMEZ, Luis, Alfonso**
**28013 MADRID (ES)**
• **PIÑERO JIMENEZ, Rafael**
**28013 MADRID (ES)**
• **GARCÍA MUÑOZ, Victor, Manuel**
**28013 MADRID (ES)**

(74) Representative: **Herrero & Asociados, S.L.**
**Cedaceros, 1**
**28014 Madrid (ES)**

(54) **METHOD AND DEVICE FOR ACTIVATING AND DEACTIVATING GEOPOSITIONING DEVICES IN MOVING VEHICLES**

(57)    A mobile user terminal (1) and method for activating/deactivating geopositioning devices (14) of the mobile user terminal (1) in moving vehicles, the mobile user terminal (1) comprising accelerometers (11) but no gyroscopes. The method detects whether a geopositioning device (14) is located in a moving vehicle by using data of acceleration signals (52) extracted only from the accelerometers (11) and metrics (53) calculated from an estimated variation of angle between successive acceleration signals (52). The method further comprises identifying at least one, short-time or long-time, probe pattern related to the situation of the moving vehicle, the probe pattern using signals and measures (21) exclusively derived from the tri-axial accelerometers (11), comprising the data of acceleration signals (52) and the calculated metrics (53). If the situation corresponds to the mobile user terminal (1) moving in the moving vehicle, the geopositioning device (14) is activated (19).

**FIG. 1**

EP 3 276 379 A1

**Description**

**Field of the invention**

The present invention has its application within the telecommunication sector, more specifically, relates to energy-efficient strategies for the automatic activation/deactivation of geopositioning devices (e.g., Global Positioning System - GPS- receivers) located in a mobile phone which, in turn, can be in a moving vehicle.

The present invention is a mobile user device and method for activating and deactivating geopositioning receivers of the mobile device, depending on whether the mobile device is riding in a moving vehicle or not, which can be driven or not by the user. This activation/deactivation only relies on tri-axial accelerometers signals from the mobile device.

**Background of the invention**

The availability of both Global Navigation Satellite System (GNSS) and Inertial Measurement Unit (IMU) in mobile devices and smartphones make them highly suitable for the development of innovative Location-Based Services (LBSs) and applications suited to the context and activities the user is involved in. As an example of these LBSs, there is a growing interest in developing smartphone-based driver behavior analysis for Insurance Telematics, i.e., usage-based automotive insurance where data on driving behavior is collected by means of telecommunications.

"Driving Behavior Analysis for Smartphone-based Insurance Telematics" by Wahlström, Johan, Isaac Skog, and Peter Händel, Proceedings of the 2nd workshop on Workshop on Physical Analytics, pp. 19-24. ACM, 2015, discusses the challenges of smartphone-based driver behavior analysis. Among the challenges of smartphone-based insurance telematics identified in Wahlström et al., two of the most relevant are: 1) the high battery cost of activating geopositioning devices (mainly GPS, Global Positioning System); and 2) the accuracy in detecting that a smartphone is riding in a vehicle.

There are existing proposals addressing the automatic and intelligent triggering of geolocation acquisition to increase the battery life. The closer references to this invention are those based on the use of activity recognition methods from low-power smartphone sensors:

-    "Intelligent Energy-Efficient Triggering of Geolocation Fix Acquisitions Based on Transitions between Activity Recognition States" by Phan, T., Mobile Computing, Applications and Services, Springer International Publishing, pp. 104-121, 2013. In this reference, geolocation is triggered based on the detection of specific activity modes (such as driving, walking, and running) using low-power tri-axial accelerometer data.
-    "A method to evaluate the energy-efficiency of wide-area location determination techniques used by smartphones" by Oshin, T. O., Poslad, S., & Ma, A., Conference on Computational Science and Engineering (CSE), 2012 IEEE 15th International pp. 326-333, 2012.
     In this reference, the embedded smartphone accelerometers are used to identify the user mobility state that is used to manage the activation and deactivation of the geolocation device
-    US 20130085861 A1 "Persistent location tracking on mobile devices and location profiling" disclosures alternative engagement or disengagement of a geopositioning receiver depending on whether a mobile device is in motion or at rest. When the geopositioning receiver is disengaged, the accelerometer may be engaged to monitor whether the device is put back in motion

Also several procedures have been proposed for detecting when a mobile or smartphone is travelling in association with a vehicle:

-    US 20130245986 A1 "Detecting that a mobile device is riding with a vehicle" presents a device to detect that a user is traveling in association with a vehicle based on the combination of sensor data (accelerometers, gyroscopes, magnetometers, etc.) together with GPS data. Accelerometer data and a state model to detect user activities (e.g., walking to the car, stepping out the car, the bus, etc., sitting and entering it, etc.).
-    "Accelerometer-based transportation mode detection on smartphones" by Hemminki, S., Nurmi, P., and Tarkoma, S., Proceedings of the 11th ACM Conference on Embedded Networked Sensor Systems, p. 13, 2013.
     This work proposes a procedure for the detection of transportation modes (stationary, walk, bus, train, metro, tram, car) using smartphone accelerometer information.

Finally, it is worth mentioning EP15382021 A1 which disclosures a general framework for energy-efficient activation and deactivation of the geopositioning receivers, in a mobile user's terminal (e.g., a smartphone, tablet, etc.), depending on whether its user is moving in a vehicle or not. EP15382021 A1 uses data from a plurality of embedded low-energy consumption sensors (not GPS) provided by the smartphone: accelerometers, gyroscopes, magnetometers, etc.

Disadvantages of prior existing proposals are the following:

- Existing procedures for the automatic activation of geopositioning receivers (i.e. GPS) depending on whether a mobile device is in motion or at rest only consider general movement patterns for the device, like US20130085861. Without considering specific movement patterns associated to a moving vehicle, prior art (US20130085861) does not allow the use of existing energy-efficient activation of geopositioning receivers for a wide range of LBS applications in vehicles.
- Prior art also provides procedures for detecting when a mobile is travelling in association with a vehicle, as US20130245986. However these procedures do not include strategies for energy-efficient activation of geopositioning receivers.
- Prior art in procedures for detecting when a mobile is travelling in association with a vehicle, as US 20130245986 A1, or for accurate detection of transportation modes (Hemminki et al.) do not address the issue of energy-efficient activation and deactivation of geopositioning receivers.
- Some existing proposals addressing the battery consumption for automatic and intelligent triggering of geolocation devices are not specific for in-vehicle detection. For example Oshin et al. and Phan consider a variety of user motion activities and US 20130085861 only considers whether a mobile device is in motion or at rest. Therefore they are not accurate enough in detecting that a smartphone is riding in a vehicle as required in smartphone-based Insurance Telematics.
- Some of those previous works rely on frequency domain based techniques. While apparently yielding interesting results, they may be prone to practical drawbacks considering the diverse values of mobile devices' sampling rates and the potential difficulty in setting a specific sampling rate for data acquisition. This can be due to a variety of applications and processes under different operating systems that can be retrieving sensor data simultaneously.
- Other approaches tend to use more complex digital signal processing techniques (e.g. FFT, DCTs) or machine learning methods (e.g., SVMs). While their computational load may not be very heavy, they may still incur certain battery drainage, considering that the detection algorithms are to be executed regularly and periodically.

Although today's smartphones are equipped with embedded geopositioning devices (mainly GPS, Global Positioning System), recently there is an increasing number of mobile devices without gyroscopes and, therefore, solutions such as EP15382021 cannot be applied for them.

Gyroscopes measure angular velocity, and thus they are able to pick all turns and orientation changes undergone by smartphones. Therefore they are particularly relevant to represent and discriminate the turns involved in driving manoeuvres from other patterns related to common human activities, be them physical activities or mobile usage related activities (slow manipulations as when watching a video, or utilising phone applications). Therefore, neglecting gyroscope means an important lack of information. Perhaps one of the main problems arises when detecting smartphone usage related slow manipulations. Those activities comprise very low acceleration energy and certain angular velocity, which can be easily detected when gyroscope is available but that they become harder to detect without this sensor. For this reason, actions must be taken in order to compensate for the troublesome loss of gyroscope information.

Therefore, it is highly desirable to develop energy-efficient procedures for the automatic activation and deactivation of geopositioning devices without requiring gyroscopes and using only tri-axial accelerometers data to provide accurate in-vehicle detection applications.

**Summary of the invention**

The present invention solves the aforementioned problems and overcomes previously explained state-of-art work limitations by providing an energy-efficient method for the automatic activation and deactivation of the geopositioning receivers in a mobile user's terminal (e.g., a smartphone, tablet, etc.) based only upon data from the tri-axial accelerometers of the mobile terminal. The activation and deactivation depends on whether its user is moving in a vehicle or not, which is detected using only the tri-axial accelerometers. The invention also considers the case in that the user of the mobile terminal/device is the driver of the vehicle.

The present invention provides a low computational complexity strategy for detecting whether the mobile device is riding in a moving vehicle, which only relies on the signals from accelerometers (and not from gyroscopes). By relying only on accelerometer data, the present invention opens the door for the deployment of Insurance Telematics services and applications over the new generation of smartphones which do not include gyroscopes.

In the context of the invention, the following concepts are used:

Geopositioning device: a device, such as GPS (Global Positioning System) device, providing geographical information related to the current position of the user.

Location-based services (LBSs): applications that require and exploit knowledge about where the device is located, as, for example, those associated to Insurance Telematics.

Short-time probes: sequential tests scheduled at a given rate to collect a small amount (short-time) of low-energy sensor data to detect possible patterns of a moving vehicle.

Long-time probes: tests over larger sequences of sensor data (e.g. collected over one minute) data to confirm patterns of a moving vehicle.

The present invention provides a configurable strategy for automatic activation of geopositioning devices, following a sequence of short-time and long-time probes for vehicle movement detection, which allows a customizable trade-off between precision and energy consumption. Short-time probes are defined to provide a first quick test to identify or discard possible moving of the vehicle in which the smartphone with geopositioning devices is located, while long-time probes are used to confirm that there is a situation, in accordance with a pattern, where the vehicle is certainly moving.

In particular, the invention provides an activation strategy which is implemented following a sequence of tests, referred to as probes, in order to detect sensor (probe) patterns that could correspond to a moving vehicle. More specifically, the geopositioning receiver activation uses short-time probes to provide a first quick identification or discard of possible moving vehicle patterns, followed by long-time probes to confirm moving vehicle situations (patterns). Furthermore, once the geopositioning receiver has been activated, the geopositioning receiver deactivation combines both positioning data (for example, speed data from GPS) and low-energy sensor data to cope with situations where, once in motion, the smartphone loses positioning information (and so GPS information is not available).

The present invention uses a low-energy procedure for detecting that the smartphone is inside a moving vehicle based exclusively on data from the accelerometers provided by the smartphone, which are embedded low-energy consumption sensors (not GPS). The algorithm for the detection of moving vehicles is implemented, with low-power consumption, in the smartphone.

A first aspect of the present invention refers to a method for activating and deactivating geopositioning devices of mobile user terminals which can be in moving vehicles (and, in a possible scenario, the user of the mobile terminal maybe drive the vehicle). The method runs in mobile user terminals having tri-axial accelerometers but no gyroscopes with and comprises detecting whether a geopositioning device provided by the mobile user terminal is located in a moving vehicle, the step of detecting using data of acceleration signals extracted from the tri-axial accelerometers and metrics calculated from an estimated variation of angle between successive acceleration signals.

In a preferred embodiment, the method further comprises identifying at least one probe pattern related to a situation of the moving vehicle, wherein:

- the probe pattern uses signals and measures exclusively derived from the tri-axial accelerometers, and
- the signals and measures comprise the data of acceleration signals extracted from the tri-axial accelerometers and the calculated metrics.

The probe pattern being may be a sequence of short-time probes which analyze the signals and measures over a first time interval or a sequence of long-time probes which combine the signals and measures over the first time interval and over a longer second time interval.

The method, based on the signals and measures exclusively derived from the tri-axial accelerometers and the, at least one, identified probe pattern, can verify whether the situation corresponds to the mobile user terminal whether moving in the moving vehicle or to the mobile user terminal being stopped in the moving vehicle. If the situation corresponds to the mobile user terminal moving in the moving vehicle, the geopositioning device is activated. Otherwise, if the situation corresponds to the mobile user terminal being stopped in the moving vehicle and the geopositioning device was already, the method deactivates the geopositioning device and goes on repeating the aforementioned steps.

In a second aspect of the present invention, a mobile user terminal or device for activating and deactivating geopositioning devices in moving vehicles, according to the method described before, is disclosed. The mobile user terminal comprises at least one geopositioning device and at least one accelerometer, but no gyroscopes. The proposed mobile user terminal further comprises means for implementing the method described before, which are:

- a location detector for detecting whether the geopositioning device is located in a moving vehicle by using data of acceleration signals extracted from the tri-axial accelerometers and metrics calculated from an estimated variation of angle between successive acceleration signals.

Additionally, if the mobile user terminal is located in the moving vehicle, the location detector can identify at least one (short-time or long-time) probe pattern related to a situation of the moving vehicle, the probe pattern using signals and measures exclusively derived from the tri-axial accelerometers. The mobile user terminal further comprises processing means for verifying, based on the, at least one, identified probe pattern, and the signals and measures exclusively derived from the tri-axial accelerometers, whether the situation corresponds to the mobile user terminal either moving or being stopped in the moving vehicle, in order to activate/deactivate the geopositioning device according to the verified situation.

In a last aspect of the present invention, a computer program is disclosed, comprising computer program code means adapted to perform the steps of the described method, when said program is run on proccesing means of a user terminal (e.g., smartphone or tablet).

The method and user terminal in accordance with the above described aspects of the invention has a number of advantages with respect to prior art, which can be summarized as follows:

- The present invention provides an efficient procedure for detecting a smartphone located in a moving vehicle managing, in a power-efficient way, the activation and deactivation of its geopositioning device. The main advantage over prior art is that the procedure only relies on low-power tri-axial accelerometer data and uses low-complexity processing algorithms. For an efficient control of battery drainage, as soon as the GPS is activated an algorithm is started to detect that the route has finished or that possible false in-vehicle detection has occurred. The deactivation algorithm is started based only on tri-axis accelerometers data and the already activated GPS fixes data. In order to guarantee minimum battery consumption, the detection of vehicle patterns both in short-time and long-time probes only use data from tri-axial accelerometers and low-complexity pattern recognition algorithms.

- The invention discloses several specific measures to compensate for the important lack of information provided by gyroscopes, which is particularly relevant when discriminating vehicle patterns from other user activities (mainly standing, or slow manipulations as when watching a video). The proposed measures are defined over some signals representing the variability in the orientation of successive acceleration vectors. These signals are designed trying to compensate for some of the information gyroscopes provide.

- To guarantee high accuracy and detect as soon as possible that a smartphone is in a moving vehicle (as required in smartphone-based Insurance Telematics) while, at the same time, controlling the battery consumption, two strategies are defined:

  I. The rate for sequential short-time probes will be dynamically changed in accordance with the probability of in-vehicle detection provided from the preceding long time probes. Activation rates will be higher when the probability of in-vehicle detection is below but close to the detection threshold.

  II. Once a short-time probe detects a possible pattern of a moving vehicle, a long-time probe is started to confirm this situation. In this invention, in order increase the detection accuracy, at the same time that a long-time probe starts the GPS is activated to collect a small number of fixes. Information provided from these GPS fixes will increase the accuracy in detecting the in-vehicle state without representing a relevant cost in battery use.

- Once a smartphone in a moving vehicle is detected, a deactivation algorithm is started based only on tri-axial accelerometers data and the already activated GPS fixes data. In many applications, for example in Insurance Telematics, once in-vehicle state has been detected the collection of information (both from GPS and sensors) increases. Therefore, again for controlling the battery drainage, as soon as the GPS is activated it is very important to run an algorithm to detect that the route has finished or that possible false in-vehicle detection has occurred.

- Both the activation and deactivation strategies are robust to situations where the smartphone may lose its positioning information. Algorithms consider the exclusive use of accelerometer data when positioning data is not available. Also a long absence of GPS data can be used as a source of information to exclude an in-vehicle state.

- The method does not require any restriction on the actual position of the smartphone inside the vehicle (i.e. it does not require the smartphone to be mounted or located on any particular place or device inside the vehicle). Therefore, the smartphone may be situated and slowly moved from different positions inside the vehicle.

These and other advantages will be apparent in the light of the detailed description of the invention.

**Description of the drawings**

For the purpose of aiding the understanding of the characteristics of the invention, according to a preferred practical embodiment thereof and in order to complement this description, the following Figures are attached as an integral part thereof, having an illustrative and non-limiting character:

Figure 1 shows a block diagram of a method for activating and deactivating geopositioning devices in a smartphone using the data from the accelerometers, according to a preferred embodiment of the invention.
Figure 2 shows short-time and long-time probes used for activating geopositioning devices in a smartphone riding in a moving vehicle, according to a possible embodiment of the invention.
Figure 3 shows long-time probes used for deactivating geopositioning devices in a smartphone riding in a moving vehicle, according to a possible embodiment of the invention.

Figure 4 shows a block diagram of a method for activating geopositioning devices in a smartphone when detected as riding in a moving vehicle, according to a possible embodiment of the invention.

Figure 5 shows signals and metrics extracted from the accelerometers data, according to a possible embodiment of the invention.

**Preferred embodiment of the invention**

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

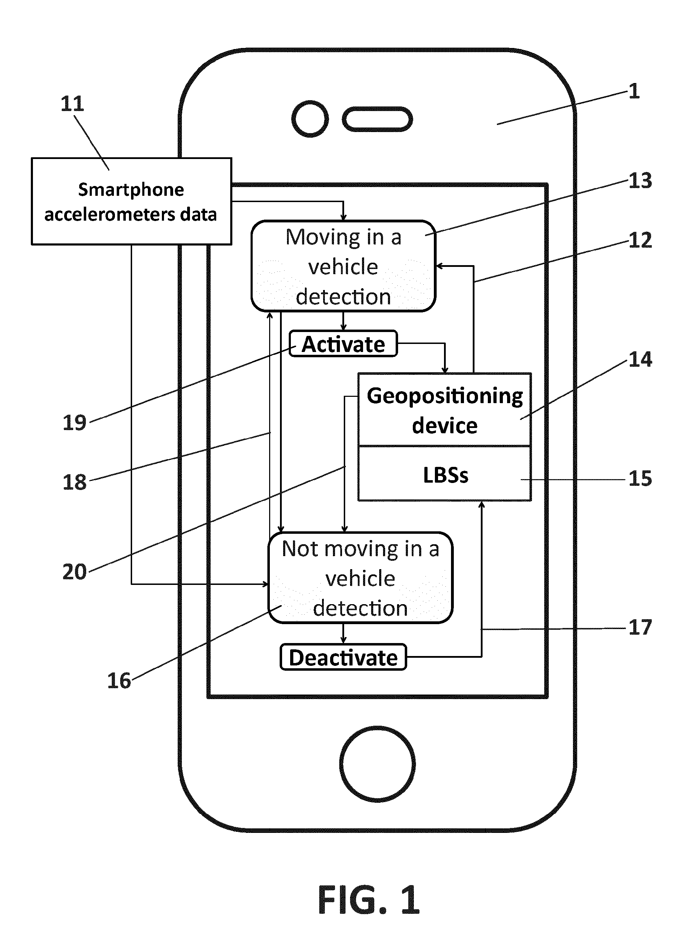

Figure 1 presents a block diagram of the method for activating and deactivating geopositioning devices (14) of a mobile user terminal (1) which can be in moving vehicles. Furthermore, in a possible scenario, the user of the mobile terminal (1) may be driving the vehicle. The method is running in the mobile user terminal (1), e.g., a smartphone, performing the following steps:

- data from low-energy tri-axial accelerometers (11) of the mobile user terminal (1) are used to automatically detect whether the mobile user terminal (1) is riding in a vehicle (12);
- the algorithm to detect the mobile is moving (13) in a vehicle can eventually active (19) the geopositioning device (14) to acquire (12) few GPS fixes, i.e., accurate locational information that the GPS system provides for specific points, in order to assist in improving the accuracy of the detection process;
- once the mobile user terminal (1) is detected moving in a vehicle, its geopositioning devices (14), e.g., a GPS receiver, are engaged or activated (19);
- additionally, one or more location-based services (15) may be also activated (19);
- a deactivation process is started to detect when the mobile user terminal (1) stops (16) riding in the vehicle;
- once the mobile user terminal (1) is detected to be stopped (16) or not to be in the vehicle, all the previously activated geopositioning devices (14) are disengaged or deactivated (17) and location-based services (15) informed;
- the automatic detection for the mobile user terminal (1) in a moving vehicle is then re-started (18).

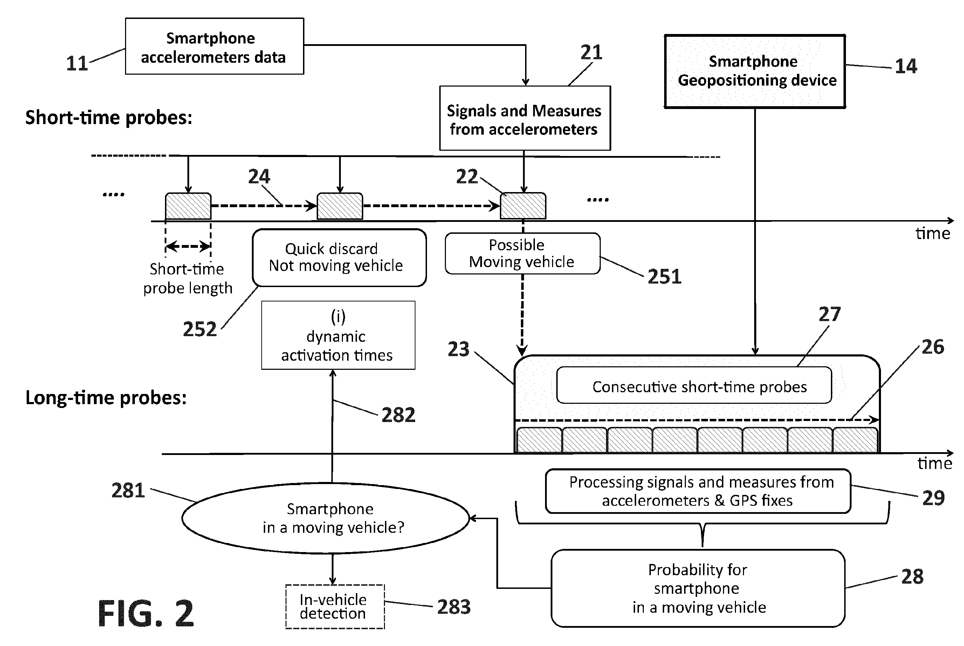

Figure 2 shows in more detail the activation strategy, which is based on two key aspects:

1) The use of signals from low-energy tri-axial accelerometers (11) to detect a moving vehicle. Moving vehicles are usually subjected to slowly changing acceleration and turning forces that present a characteristic behavior different from other user activities of daily living such as walking, standing with certain motion, watching a video, etc.

2) The use of a sequence of short-time and long-time tests or probes for vehicle movement detection. Short-time probes (22) analyze patterns from low-energy accelerometers (11) over a relatively short period of time; time segments around 10 seconds are usually enough to contain notable forces related to vehicle movements. Long-time probes (23) provide more reliable vehicle movement detection by processing data from both low-energy accelerometers and few GPS fixes over longer periods of time. In some embodiments, each long-time probe may correspond to several short-time probes; a typical ratio for short-time and long-time probes duration may be 1:10, thus long-time probes duration may be around 100 seconds.

2.1) A sequence of consecutive short-time probes (22) are triggered at variable time intervals (24). Each short-time probe implements an algorithm of short-time probes (22) based on signals and measures (21) exclusively derived from accelerometers data (11). The output of this algorithm provides either a pattern of possible moving vehicle situation (251) or a quick discard (252) for situations clearly not related to moving vehicles, such as walking, running, motionless, etc.

2.2) Long-time probes (23) are activated only after a short-time probe detects a possible pattern of a moving vehicle (251). The output of the processing algorithm for each long-time probe (23) is a probability (28) that the smartphone is in a moving vehicle. As shown in Figure 2, for some implementations the length or duration (26) of a long-time probe (23) can correspond to several consecutive short-time probes (27). In that way some measurements already implemented at short-time level can be easily reused at a long-time interval.

2.3) The long-time in-vehicle detection algorithm uses signals and measures (21) from accelerometers (11) data as well as few GPS fixes from geopositioning devices (14) (14). This geopositioning information can be used for assuring moving vehicle situation. For instance, if the global covered distance between consecutive GPS coordinates (pair latitude/longitude) exceeds certain threshold, the probability that the smartphone is moving in a vehicle will be higher.

2.4) By applying a decision algorithm (281), for example applying a simple threshold to the output probability (28) for in-vehicle detection generated by the long-time in-vehicle detection algorithm (29), an in-vehicle decision can be made (283). Also using this information, the activation rate of short-time probes (22) can be triggered (282) at variable time intervals (24), using shorter activation times when the in-vehicle probability is slightly below the decision threshold.

The strategy for automatic activation of the geopositioning receiver in the mobile user terminal (1) shown in Figure 2 can be defined through a set of configuration parameters so that a given implementation can be adapted to different trade-offs between precision and energy consumption. More specifically, the configuration may be done through the definition of different values or strategies for:

- lengths for short-time and long-time probes;
- dynamic variation of time interval to trigger consecutive short-time probes based on the long-term estimations of in-vehicle probabilities;
- number of consecutive short-time probes inside a long-time probe.

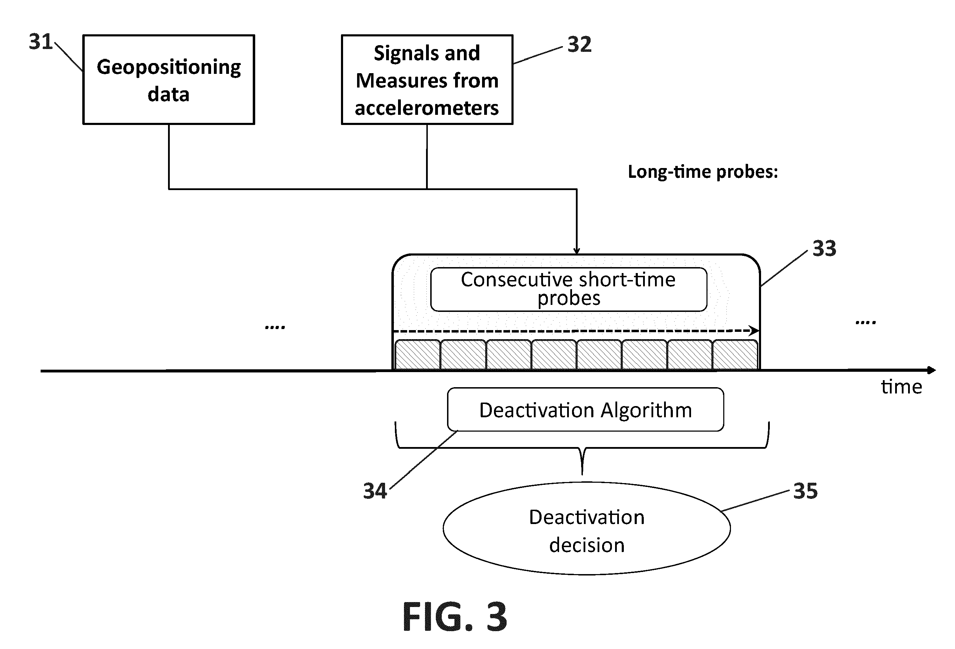

The strategy for the deactivation of the geopositioning receiver, shown in Figure 3, presents the following features:

- Once the in-vehicle state is detected the geopositioning receiver is activated, leading to notable increase in battery consumption. Also many location-based services, as is the case of Insurance Telematics applications, start a continuous collection, storage and processing of sensor data which also increase the smartphone power demand. Consequently it is very relevant to initiate a deactivation process able to accurately detect with the smallest delay that the smartphone is not moving in a vehicle. Thus, considering the availability of sensor data and geopositioning data, the deactivation decision (35) can be based on the deactivation algorithm (34) processing data from the available geopositioning data (31), e.g., GPS fixes, as well as from signals and measures (32) derived from accelerometers (11) data.
- In order to detect that the smartphone is no longer moving in a vehicle, the deactivation algorithm may only consider long-time probes (33) that can be continuously processed immediately after in-vehicle detection (283). The processing of longer period of time in a continuous way can improve the accuracy and shorten the delay in the deactivation decision (35). It is important to note that this strategy does not produce a relevant increase in battery drainage because geopositioning data (31) and accelerometer (11) data are already in use by the activated LBS, so only a small increase in power consumption can be expected from the low computational cost of the deactivation algorithm (34).
- Although after detecting that the smartphone is in a moving vehicle the geopositioning receiver is activated, the deactivation algorithm (34) is able to manage situations where the receiver may lose its positioning information. Two strategies can be implemented: 1) when geopositioning data (31) is lost during periods of time of around 5 minutes, for example when the vehicle is crossing a tunnel or a dense urban area, the deactivation decision can be based only on accelerometers data; and 2) in those cases where geopositioning data (31) is lost for longer periods of time, a deactivation decision (35) can be raised.
- The most common situation leading to a deactivation decision (35) is the smartphone user leaving the vehicle. However, although less frequent, it can also be that the vehicle has stopped and the smartphone remains inside of the stopped vehicle. The deactivation algorithm can therefore use geopositioning data (31) and accelerometer (11) data to differentiate between those situations from other intermediate stops during a normal vehicle journey, as vehicle stops in a traffic light, or during a traffic jam.

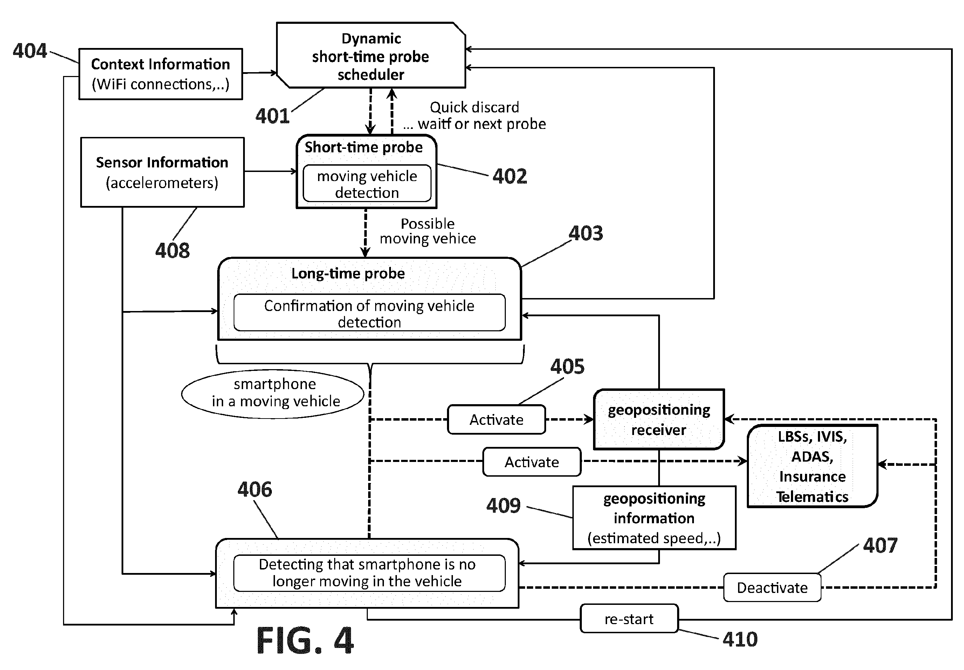

Figure 4 illustrates a broad implementation of the strategy to activate a geopositioning device in a smartphone when it is moving in a vehicle. Short-time probes are triggered at variable time intervals (401) based on the probability of in-vehicle detection obtained using long-time probes (403). Short-time probes implement a fast and energy efficient algorithm using only tri-axial accelerometer data (408) to detect when it is probable that the smartphone is riding in a vehicle (402). Also as shown in Figure 4, following positive short-time detection a long-time probe is initiated to provide a more reliable detection test (403). The detection algorithm in long-time probes is based on the analysis of data from a longer period of time. The output of the detection algorithm is an in-vehicle probability. When this probability is above a configurable value an in-vehicle detection is raised. In those cases where this probability is lower but close to the detection threshold, the activation rate of short-time probes can be increased using a dynamic scheduler (401).

Different implementations can use other sources of context information available in the smartphone or mobile user terminal (1), such as Wi-Fi connections, to define different short-time or long-time activation schedules (404). Also other sources of information as the time of the day or particular user profiles, if available, could be used to implement different ad-hoc activation strategies.

After detecting the smartphone riding into a moving vehicle, the geopositioning receiver is activated (405). This allows the subsequent activation of a variety of in-vehicle location-based services (LBSs) as Insurance Telematics, in-vehicle information systems (IVIS), advanced driving assistant systems (ADAS), etc. At this point the embodiment of this invention provides a strategy to detect that the mobile user terminal (1) is no longer moving in the vehicle (406), making this information available to the active LBSs, disengaging the geopositioning receiver (407) and restarting the short-time probe scheduler (410). Again, any other sources of contextual information can be used to implement the deactivation algorithm, for example the detection of Wi-Fi connections, or the activation of some particular smartphone applications or activities defined in specific user profiles.

Once the geopositioning receiver is activated, detecting that the mobile user terminal (1) is no longer in a moving vehicle (406) can use estimated speed information provided by the geopositioning device (409). However there may be situations where the geopositioning receiver may lose accuracy and information (for example entering into a tunnel, an area with high buildings, etc.), thus, similarly as in the activation algorithm, available data (408) from the accelerometers (11) may be used.

Since according to any embodiment of the invention, only data (408) from the accelerometers (11) are used, along with information provided by the geopositioning device (409), in order to compensate for the troublesome loss of gyroscope information, the proposed method must take the actions described below.

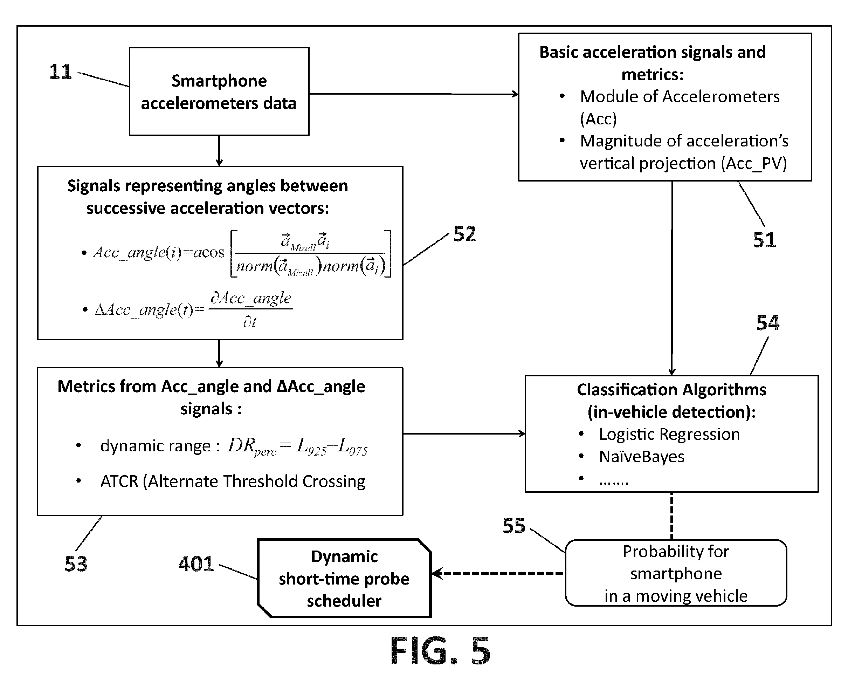

The proposed method uses simple statistics and metrics computed over a number of signals that are based or derived only from data (408) extracted from tri-axial accelerometers (11). Figure 5 illustrates some possible embodiments. Some of these signals and metrics are basic acceleration signals and metrics (51) commonly used in the prior art, as the module of acceleration captured from accelerometers (*Acc*) or the magnitude of acceleration's vertical projection (*Acc_PV*). Beside these, the proposed method introduces the use of two new signals, denoted as *Acc_angle* and *ΔAcc_angle,* which are derived from the acceleration signal (52). These two signals, *Acc_angle* and *ΔAcc_angle,* referred to in Figure 5 and further described below, try to represent the variability in the direction of the different forces acting on the mobile devices for representing the variability in the orientation of successive acceleration vectors. The principle behind these two signals is to calculate the angle between different estimations of successive acceleration vectors, thus keeping track from the temporal evolution of these vectors. In this way, the information lost due to lack of gyroscope is partially recovered, including rough estimations of turns from in-vehicle manoeuvres as well as smartphone orientation changes from manipulations. Moreover, additional information can be extracted that was not present in the gyroscope readings, such as patterns from brake/acceleration manoeuvres or the high frequency noise that can be present in the accelerometer signal.

Instead of employing frequency domain processing or more complex techniques, the proposed method makes use of simple metrics (53) calculated over the aforementioned *Acc_angle* and *ΔAcc_angle* signals. These metrics (53), detailed below, include:

- simple statistics, i.e., variance, percentile, interquartile range, etc.,
- basic signal processing metrics, i.e., energy, dynamic range, etc., and
- time-domain metrics such as the Alternate Threshold Crossing Rate (ATCR).

The listed metrics (53) conveniently applied over the *Acc_angle* and *ΔAcc_angle* signals, windowed either in short or long-time probes, lead to a plurality of measures or features that can enter as input of classifiers (54), e.g., logistic regression -LR- or Bayesian Networks -BN, to obtain a probability (55) that the mobile user terminal (1) is in a moving vehicle. Finally, appropriate decisions can be made, depending on the type of detection algorithm.

As a result, a possible embodiment of this invention makes use of the synergy between two types of measures:

i. Standard measures computed on tri-axial acceleration signals (51) as estimations of acceleration forces, like global energies adding data from each one of the acceleration signals after removing gravity (*cGE_acc*).
ii. The metrics (53) calculated over the aforementioned *Acc_angle* and *ΔAcc_angle* signals, based on the variability of the direction between successive acceleration vectors estimated along time.

The combination of these two groups, i, ii, of measures (51, 53) allows the implementation of a set of in-vehicle detection algorithms based on Classification Algorithms (54), providing accurate in-vehicle detection while maintaining fairly simple processing and low-energy consumption.

In some other embodiments, the available measures (51, 53), previously described, may be used to make in-vehicle detection decisions during short-time probes (251). A plurality of classification algorithms (54) such as decision rules, classification trees or logistic regression may be used. In some other embodiments, all these measures (51, 53) may be used as inputs to different classification algorithms (54) such as Bayesian Networks -BN- or Logistic Regression -LR, which are suitable to provide an estimation of the in-vehicle probability (55). The estimated in-vehicle probability (55), obtained during long-term probes (28), may be used to control the dynamic activation times for short-time probes (401).

The signals *Acc_angle* and *ΔAcc_angle* represent angle and the variation of the angle respectively between successive acceleration vectors or signals (52) for the given probes, short or long-time probes, and are calculated as follows. The *Acc_angle* signal is defined as the angle (radians) between:

- the raw acceleration vector at every time/sampling instant $\vec{a}_i = [a_{x_i}, a_{y_i}, a_{z_i}]$, and

- the acceleration vector $\vec{a}_{Mizell} = [a_{Mx}, a_{My}, a_{Mz}]$ given by the gravity estimation using the Mizell method, described in "Using gravity to estimate accelerometer orientation" by Mizell, D., Seventh IEEE International Symposium on Proceedings In Wearable Computers, pp. 252-253, 2005.

The Mizell method consists of averaging each accelerometer component of the raw acceleration vector $\vec{a}_i = [a_{x_i}, a_{y_i}, a_{z_i}]$ during certain amount of time as follows:

$$a_{Mx} = \frac{1}{N} \sum_{i=1}^{N} a_{x_i} \quad a_{My} = \frac{1}{N} \sum_{i=1}^{N} a_{y_i} \quad a_{Mz} = \frac{1}{N} \sum_{i=1}^{N} a_{z_i}$$

where N is the averaging time, in samples, and $a_{x_i}$ represents the acceleration reading in the x-axis for instant i. Analogous explanation applies for *y* and z axes.

Thus, a sample of *Acc_angle* signal at instant i is computed as:

$$Acc\_angle(i) = a\cos\left[\frac{\vec{a}_{Mizell}\vec{a}_i}{norm(\vec{a}_{Mizell})norm(\vec{a}_i)}\right]$$

Note that while $\vec{a}_i$ corresponds to the instantaneous acceleration vector, i.e., it changes in every iteration of the algorithm, $\vec{a}_{Mizell}$ represents a vector estimated over a period of time; hence it remains constant throughout such a period. This period can be the duration of the short-time probe or the duration of the long-time probe, depending on the detection algorithm.

The *ΔAcc_angle* signal is defined as the time derivative of the *Acc_angle* signal:

$$\Delta Acc\_angle(t) = \frac{\partial Acc\_angle}{\partial t}$$

Both *Acc_angle* and *ΔAcc_angle* signals complement each other in an attempt to recover part of the information provided by the missing gyroscope and capturing some additional cues, as explained above.

In particular, the *Acc_angle* signal has proven to be able to effectively represent moving vehicle turn patterns, which resemble to some extent those captured by the gyroscope. On the other hand, the *ΔAcc_angle* signal has shown to be especially useful when detecting human physical activities. It is able to discriminate more easily between in-vehicle type patterns and those frequently seen when the user strongly manipulates the smartphone or carries it when walking out of the vehicle once the route is over.

Regarding the metrics (53) calculated over the *Acc_angle* and *ΔAcc_angle* signals, a plurality of existing both simple statistics and signal processing metrics may be used. These well-known metrics do not require further explanation, except the next particularities:

- The dynamic range metric can be subject to modifications depending on the detection algorithm. These modifications include:

o Instead of using a maximum value, which can correspond to a spurious value, the next value right after the maximum may be used.

o Using a robust percentile-based dynamic range rather than the conventional dynamic range. For instance: $DR_{perc} = L_{925} - L_{075}$, being $L_{925}$ and $L_{075}$ the 92.5-th and the 7.5-th percentile respectively.

These modifications are used in order to make the metric (53) more robust against possible spikes or artificial values in the signal under consideration, as well as providing the metric with more informative nature regarding the distribution shape/type. Note that this computation follows a similar concept to that of the interquartile range, but with different percentiles vales.

• The Alternate Threshold Crossing Rate, ATCR, is an extension of the zero-crossing rate with two modifications:

o Crossings are to be produced through two thresholds of non-zero magnitude, which are symmetric with respect to zero. That is, the crossing being evaluated is of the signal under consideration with a threshold as follows:

$$threshold = \pm c$$

where c is a magnitude of the signal under consideration to be defined beforehand.

o Rate is increased only when the crossings are produced in an alternate fashion, i.e., $+c,-c,+c,-c,...$

In this embodiment, the ATCR metric is applied to the acceleration module signal (Acc), windowed by the short-time probe. It tends to generate crossing rate mainly when the subject carrying the mobile device is walking or running and rarely in the rest of possible typical situations, including when the mobile user terminal (1) is within a moving vehicle performing common manoeuvring. Therefore, the resulting measure has shown to be particularly relevant when detecting walking patterns, yielding similar results to other frequency domain or more sophisticated approaches, but being conceptually and programmatically much easier. For this reason, it is utilized within all the algorithms, both in-vehicle detection and deactivation algorithm.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1.   A method for activating and deactivating geopositioning devices in moving vehicles, the method comprising:

- detecting whether a geopositioning device (14) is located in a moving vehicle, the geopositioning device (14) being provided by a mobile user terminal (1) with tri-axial accelerometers (11) and without gyroscopes,

being **characterized in that** the step of detecting uses data of acceleration signals (52) extracted from the tri-axial accelerometers (11) and metrics (53) calculated from an estimated variation of angle between successive acceleration signals (52).

2.   The method according to claim 1, further comprising:

- identifying at least one probe pattern related to a situation of the moving vehicle, the probe pattern using signals and measures (21) exclusively derived from the tri-axial accelerometers (11), the signals and measures (21) comprising the data of acceleration signals (52) extracted from the tri-axial accelerometers (11) and the calculated metrics (53), and the probe pattern being selected from:

- a sequence of short-time probes (22) for analyzing the signals and measures (21) over a first time interval (24), and
- a sequence of long-time probes (23) for combining the signals and measures (21) over the first time interval (24) and over a second time interval longer than the first time interval (24);

- based on the signals and measures (21) exclusively derived from the tri-axial accelerometers (11) and the, at least one, identified probe pattern, verifying whether the situation corresponds to the mobile user terminal (1) moving (13) in the moving vehicle or to the mobile user terminal (1) being stopped (16) in the moving vehicle;
- if the situation corresponding to the mobile user terminal (1) moving in the moving vehicle is verified, activating (19) the geopositioning device (14).

3. The method according to claim 2, further comprising:

- if the geopositioning device (13) is activated and the situation corresponding to the mobile user terminal (1) being stopped in the moving vehicle is verified, deactivating (17) the geopositioning device (14).

4. The method according to any preceding claim, wherein the variation of angle between successive acceleration signals (52) is estimated from two signals, denoted as *Acc_angle* and *ΔAcc_angle* signals, *Acc_angle* signal representing the angle between a raw acceleration vector $\vec{a}_i = [a_{x_i}, a_{y_i}, a_{z_i}]$ at a sampling time instant and an acceleration vector $\vec{a}_{Mizell} = [a_{Mx}, a_{My}, a_{Mz}]$ estimated over a time period, and *ΔAcc_angle* signal representing the time derivative of the *Acc_angle* signal.

5. The method according to claim 4, wherein the estimated acceleration vector $\vec{a}_{Mizell} = [a_{Mx}, a_{My}, a_{Mz}]$, defined by the components $a_{Mx}$. $a_{My}$ and $a_{Mz}$ in the x-axis, y-axis and z- axis respectively, is calculated as:

$$a_{Mx} = \frac{1}{N} \sum_{i=1}^{N} a_{x_i} \quad a_{My} = \frac{1}{N} \sum_{i=1}^{N} a_{y_i} \quad a_{Mz} = \frac{1}{N} \sum_{i=1}^{N} a_{z_i}$$

where N is a number of samples in the time period, $a_{x_i}$, $a_{y_i}$ and $a_{z_i}$ represent the acceleration component of the raw acceleration vector respectively in the x-axis, y-axis and z- axis for time instant i.

6. The method according to claim 5, wherein the *Acc_angle* signal at time instant *I* is calculated as:

$$Acc\_angle(i) = a\cos\left[\frac{\vec{a}_{Mizell}\vec{a}_i}{norm(\vec{a}_{Mizell})norm(\vec{a}_i)}\right]$$

7. The method according to claim 2 and any of claims 4-6, wherein the period is selected from the first interval (24) of the short-time probe (22) or the duration (26) of the long-time probe (23).

8. A mobile user terminal (1) for activating geopositioning devices in moving vehicles, the mobile user terminal (1) with at least one geopositioning device (14) and tri-axial accelerometers (11) and without gyroscopes, **characterized by** further comprising:

- a location detector for detecting whether a geopositioning device (14) is located in a moving vehicle by using data of acceleration signals (52) extracted from the tri-axial accelerometers (11) and metrics (53) calculated from an estimated variation of angle between successive acceleration signals (52) and, if the mobile user terminal (1) is located in the moving vehicle, identifying at least one probe pattern related to a situation of the moving vehicle, the probe pattern using signals and measures (21) exclusively derived from the tri-axial accelerometers (11), the signals and measures (21) comprising the data of acceleration signals (52) extracted from the tri-axial accelerometers (11) and the calculated metrics (53), and the probe pattern being selected from:

- a sequence of short-time probes (22) for analyzing the signals and measures (21) over a first time interval (24), and
- a sequence of long-time probes (23) for combining the signals and measures (21) over the first time interval (24) and over a second time interval longer than the first time interval (24);

- processing means for verifying, based on the, at least one, identified probe pattern, and the signals and measures (21) exclusively derived from the tri-axial accelerometers (11), whether the situation corresponds to the mobile user terminal (1) moving (13) in the moving vehicle or to the mobile user terminal (1) being stopped (16) in the moving vehicle and, if the situation corresponds to the mobile user terminal (1) riding in the moving vehicle is verified, activating (19) the geopositioning device (13).

9. The mobile user terminal (1) according to claim 8, wherein the processing means are configured for deactivating (17) the geopositioning device (14) if the geopositioning device (13) is previously activated and the situation corresponding to the mobile user terminal (1) being stopped (16) in the moving vehicle is verified.

10. The mobile user terminal (1) according to any of claims 8-9, wherein the geopositioning device (13) is a GPS receiver.

11. The mobile user terminal (1) according to any of claims 8-10, which is a smartphone.

12. The mobile user terminal (1) according to any of claims 8-11, which is a tablet.

13. A computer program product comprising program code means which, when loaded into processing means of a mobile user terminal (1), make said program code means execute the method according to any of claims 1-7.

**FIG. 1**

FIG. 2

Signals and Measures from accelerometers — 32

Geopositioning data — 31

Long-time probes:

33 — Consecutive short-time probes

time

Deactivation Algorithm — 34

Deactivation decision — 35

**FIG. 3**

**404**

Context Information
(WiFi connections,..)

Dynamic
short-time probe
scheduler

**401**

Quick discard
... waitf or next probe

Sensor Information
(accelerometers)

Short-time probe

moving vehicle
detection

**402**

**408**

Possible
moving vehice

**403**

Long-time probe

Confirmation of moving vehicle
detection

smartphone
in a moving vehicle

**405**

Activate

geopositioning
receiver

Activate

LBSs, IVIS,
ADAS,
Insurance
Telematics

**406**

**409**

geopositioning
information
(estimated speed,..)

Detecting that smartphone is no
longer moving in the vehicle

Deactivate

**407**

re-start

**410**

# FIG. 4

**11** — Smartphone accelerometers data

Basic acceleration signals and metrics:
- Module of Accelerometers (Acc)
- Magnitude of acceleration's vertical projection (Acc_PV)

**51**

Signals representing angles between successive acceleration vectors:

- $Acc\_angle(i) = acos\left[\dfrac{\vec{a}_{Mizell}\vec{a}_i}{norm(\vec{a}_{Mizell})norm(\vec{a}_i)}\right]$

**52**

- $\Delta Acc\_angle(t) = \dfrac{\partial Acc\_angle}{\partial t}$

Metrics from Acc_angle and ΔAcc_angle signals :

- dynamic range : $DR_{perc} = L_{925}-L_{075}$

- ATCR (Alternate Threshold Crossing

**53**

**54**

Classification Algorithms (in-vehicle detection):
- Logistic Regression
- NaïveBayes
- .......

**55**

Probability for smartphone in a moving vehicle

**401** — Dynamic short-time probe scheduler

**FIG. 5**

Europäisches
Patentamt

European
Patent Office

Office européen
des brevets

# EUROPEAN SEARCH REPORT

Application Number

EP 16 38 2363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/087264 A1 (GOYAL AMIT [US]) 26 March 2015 (2015-03-26) | 1-3,8-13 | INV. G01S19/34 |
| Y | * pages 1-13; figures 1,6 * | 4-7 | G01S19/14 H04W4/04 |
| Y,D | MIZELL D: "Using gravity to estimate accelerometer orientation", WEARABLE COMPUTERS, 2003. PROCEEDINGS. SEVENTH IEEE INTERNATIONAL SYMP OSIUM ON 21-23 OCT. 2003, PISCATAWAY, NJ, USA,IEEE, LOS ALAMITOS, CA, USA, 21 October 2003 (2003-10-21), pages 252-253, XP010673894, DOI: 10.1109/ISWC.2003.1241424 ISBN: 978-0-7695-2034-6 * the whole document * | 4-7 | |
| A | US 2013/179107 A1 (SETOGUCHI HISAO [JP] ET AL) 11 July 2013 (2013-07-11) * paragraph [0049] - paragraph [0055]; figure 5 * | 1,4-8,13 | |
| A,D | US 2013/245986 A1 (GROKOP LEONARD HENRY [US] ET AL) 19 September 2013 (2013-09-19) * the whole document * | 1-13 | TECHNICAL FIELDS SEARCHED (IPC) G01S H04W G01C |
| A,D | THOMAS OLUTOYIN OSHIN ET AL: "A Method to Evaluate the Energy-Efficiency of Wide-Area Location Determination Techniques Used by Smartphones", COMPUTATIONAL SCIENCE AND ENGINEERING (CSE), 2012 IEEE 15TH INTERNATIONAL CONFERENCE ON, IEEE, 5 December 2012 (2012-12-05), pages 326-333, XP032315139, DOI: 10.1109/ICCSE.2012.52 ISBN: 978-1-4673-5165-2 * the whole document * | 1-13 | |

-/--

The present search report has been drawn up for all claims

| Place of search | Date of completion of the search | Examiner |
|---|---|---|
| Munich | 25 January 2017 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2013/085861 A1 (DUNLAP SCOTT [US]) 4 April 2013 (2013-04-04) * the whole document * ----- | 1-13 | |

TECHNICAL FIELDS
SEARCHED      (IPC)

The present search report has been drawn up for all claims

| Place of search | Date of completion of the search | Examiner |
|---|---|---|
| Munich | 25 January 2017 | Ribbe, Jonas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 16 38 2363

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2017

| Patent document cited in search report | Publication date | Patent family member(s) | Publication date |
|---|---|---|---|
| US 2015087264 A1 | 26-03-2015 | US 2012289244 A1 | 15-11-2012 |
| | | US 2015087264 A1 | 26-03-2015 |
| | | US 2015087327 A1 | 26-03-2015 |
| US 2013179107 A1 | 11-07-2013 | CN 102484660 A | 30-05-2012 |
| | | JP 5225475 B2 | 03-07-2013 |
| | | US 2013179107 A1 | 11-07-2013 |
| | | WO 2011083572 A1 | 14-07-2011 |
| US 2013245986 A1 | 19-09-2013 | CN 103843314 A | 04-06-2014 |
| | | JP 5774228 B2 | 09-09-2015 |
| | | JP 2014531816 A | 27-11-2014 |
| | | KR 20140060369 A | 19-05-2014 |
| | | US 2013245986 A1 | 19-09-2013 |
| | | WO 2013040493 A1 | 21-03-2013 |
| US 2013085861 A1 | 04-04-2013 | AU 2012315722 A1 | 03-04-2014 |
| | | AU 2016200873 A1 | 25-02-2016 |
| | | CA 2849815 A1 | 04-04-2013 |
| | | CN 103842845 A | 04-06-2014 |
| | | EP 2761557 A1 | 06-08-2014 |
| | | KR 20140069051 A | 09-06-2014 |
| | | US 2013085861 A1 | 04-04-2013 |
| | | WO 2013049638 A1 | 04-04-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130085861 A1
- US 20130245986 A1
- EP 15382021 A1

- US 20130085861 A
- US 20130245986 A
- EP 15382021 A

**Non-patent literature cited in the description**

- **WAHLSTRÖM ; JOHAN ; ISAAC SKOG ; PETER HÄNDEL.** Driving Behavior Analysis for Smartphone-based Insurance Telematics. *Proceedings of the 2nd workshop on Workshop on Physical Analytics,* 2015, 19-24
- Intelligent Energy-Efficient Triggering of Geolocation Fix Acquisitions Based on Transitions between Activity Recognition States. **PHAN, T.** Mobile Computing, Applications and Services. Springer International Publishing, 2013, 104-121

- A method to evaluate the energy-efficiency of wide-area location determination techniques used by smartphones. **OSHIN, T. O. ; POSLAD, S. ; MA, A.** Conference on Computational Science and Engineering (CSE). IEEE, 2012, 326-333
- **HEMMINKI, S. ; NURMI, P. ; TARKOMA, S.** Accelerometer-based transportation mode detection on smartphones. *Proceedings of the 11th ACM Conference on Embedded Networked Sensor Systems,* 2013, 13
- **MIZELL, D.** Using gravity to estimate accelerometer orientation. *Seventh IEEE International Symposium on Proceedings In Wearable Computers,* 2005, 252-253